# EUROPEAN PATENT APPLICATION

(11) **EP 4 501 185 A1**
(43) Date of publication of application: **05.02.2025**
(21) Application number: 24192978.5
(22) Date of filing: 05.08.2024
(51) Int. Cl.: A47J 37/04, A47J 37/07, A47J 37/06

(54) **CONVERTIBLE ROTISSERIE SUPPORT INSERT FOR A BARBECUE GRILL**

(30) Priority: 04.08.2023 US 202363530904 P
(71) Applicant: Charcoal Companion Limited, Wan Chai (HK)
(72) Inventor: Borovicka, Cory Thomas, Oakland, California (US); Hopmans, Thomas Marcus, Woodland,California (US)
(74) Representative: Dennemeyer & Associates S.A.

(57) **Abstract**

A convertible rotisserie support insert for a barbecue grill has an arcuate body portion (13) having an open front end (45) and a back end (23), and a height that tapers from a maximum height at the open front end of the body portion to a minimum height at the back end of the body portion. A front cover portion (21) is removably attachable to the arcuate body portion so as to extend across the front opening of the arcuate body portion. The front cover portion has at least one upwardly extending lid support structure (41) configured to support the hinged lid (55) of a barbecue grill (51) in a first angled use position relative to the bowl (53) of the barbecue grill when the convertible rotisserie support insert is placed on the rim of a hinged lid barbecue bowl. Removal of the front cover portion allows the hinged lid of the barbecue grill to drop down onto the top side (15) of the arcuate body portion (13) to a second angled use position relative to the bowl of the barbecue grill.

## Description

### Cross-Reference to Related Applications

This application claims the benefit of Provisional Patent Application No. 63/530,904, filed August 4, 2023.

### Background

The present invention generally relates to apparatuses and devices used in outdoor barbecuing and more particularly to accessories for adding a rotisserie function to an existing barbecue grill. The invention has particular application to barbecue grills that have a round shaped bowl and a lid that hinges to the grill bowl, such as, for example, the Big Green Egg barbecue grill.

In order to add a rotisserie unit to a barbecue grill, a structure needs to be provided that supports the rotisserie unit on the top rim of the grill bowl so the rotating parts of the rotisserie extend over the heat source in the bowl. With barbecues having a round shape, this is suitably done with ring-shaped structures to which the ends of the rotisserie unit can be attached. However, with barbecue grills having hinged lids, that is, lids that are attached to the rim of the grill bowl by a hinge, anyone desiring to use a ring support would have to consider the fact that the gap between the top rim of the bowl and the bottom rim of the hinged lid of the barbecue grill narrows as you move toward the connecting hinge. To accommodate this characteristic, wedge-shaped support rings, such as disclosed in US Patent No. 9,603,484, have been devised to provide the support needed for the rotisserie unit. The wedge shape allows the hinged lid of the barbecue to rest on the top side of the support ring with a minimal displacement of the lid while providing the needed structural support for the rotisserie unit.

The problem with conventional wedge-ring supports such as disclosed in the above-mentioned patent is that it is often advantageous to have air circulation in the cooking chamber below the lid. In the above-referenced patent, the disclosed wedge support effectively seals the bottom rim of the hinged lid to the top of the wedge-ring, thereby preventing the air passage into the cooking chamber. The present invention overcomes this problem by providing an insert that provides the needed support for the rotisserie unit while allowing the passage of air through the insert. The invention also provides for a simplified method of attaching the rotisserie unit to the supporting insert and further uniquely allows for the conversion of the insert into a structure that turns the barbecue grill into a pizza oven.

### Summary of the Invention

The invention is directed to a rotisserie support insert for a round barbecue grill having a heat source bowl with a circular top rim, a grill grate supported near the top rim of the bowl, and a hinged lid for covering the heat source bowl to create an enclosed cooking chamber above a heat source. The insert is comprised of an arcuate body portion having an open front end. The height of the arcuate body portion, defined by the distance between the top and bottom sides of the arcuate body, is tapered from a maximum height at the open front end of the body portion to a minimum height at the back end of the body portion. The arcuate body portion is constructed having a radius that allows it to sit on and be supported by the top rim of the bowl of the barbecue grill and has means on opposed sides of the arcuate body portion for attaching a rotisserie unit to the insert's arcuate body portion so that the rotisserie unit operatively extends across and is supported by the arcuate body portion. A front cover portion removably attached to the arcuate body portion extends across the front opening of the arcuate body portion. The front cover portion has upwardly extending lid support structures configured to support the hinged lid of a barbecue grill in a first angled use position relative to the bowl of the barbecue grill when the convertible rotisserie support insert is placed on the rim of a hinged lid barbecue bowl with a rotisserie unit attached to the arcuate body portion. This first angled use position is sometimes referred to herein as the "rotisserie mode." The removal of the front cover portion allows the hinged lid of the barbecue to drop down onto the top side of the arcuate body portion and thus into a second angled use position relative to the bowl of the barbecue grill (sometimes referred to herein as the "pizza mode"). With the front cover removed, an access opening is provided at the front end of the arcuate body portion through which food items can be inserted and placed on a grill grate of the barbecue grill.

In a further aspect of the invention, means are provided for advantageously attaching a rotisserie unit to the top side of the arcuate body portion. The attachment means can include at least one prong hole in the top side of the arcuate body portion on opposed sides of the arcuate body portion, and pivot brackets pivotally attachable to the ends of the spit rod of a rotisserie unit. The pivot brackets have at least one downwardly projecting prong insertable into the at least one top side prong hole on opposed sides of the arcuate body portion so as to hold the rotisserie to the top of the body portion.

Other aspects of the invention will be evident from the following specification and claims, and the accompanying drawings.

### Brief Description of the Drawings

Fig. 1 is a top perspective view of a convertible rotisserie support insert for a barbecue grill in accordance with the invention with the insert configured in a rotisserie mode and with the rotisserie unit attached to the top of the insert.
Fig. 2 is an exploded view thereof.
Fig. 2A is an enlarged partial view thereof showing the mounting brackets used to attach the illustrated rotisserie unit to the top side of the arcuate body portion of the insert.
Fig. 3 is an enlarged top perspective view of a convertible rotisserie support insert shown in Fig. 1 with the rotisserie unit removed.
Fig. 4 is a bottom perspective view thereof.
Fig. 5 is a right side elevational view thereof.
Fig. 5A is a cross-sectional view thereof taken along section lines 5-5 in Fig. 5.
Fig. 6 is a front elevational view thereof.
Fig. 7 is a top plan view thereof.
Fig. 8 is a bottom plan view thereof.
Fig. 9 is a top perspective view of a convertible rotisserie support insert for a barbecue grill in accordance with the invention with the insert configured in pizza mode.
Fig. 10 is a right side elevational view thereof.
Fig. 11 is a top plan view thereof.
Fig. 12 shows in a side elevational view how a convertible rotisserie support insert for a barbecue grill in the rotisserie mode is placed in a round barbecue grill to hold the hinged lid of the barbecue grill in a first angled position relative to the bowl of the barbecue grill when the convertible rotisserie support insert is placed on the rim of a hinged lid barbecue bowl.
Fig. 13 shows in a side elevational view how a convertible rotisserie support insert for a barbecue grill in the rotisserie mode is placed in a round barbecue grill to hold the hinged lid of the barbecue grill in a second angled position relative to the bowl of the barbecue grill when the convertible rotisserie support insert is placed on the rim of a hinged lid barbecue bowl.

### Detailed Description of the Illustrated Embodiment

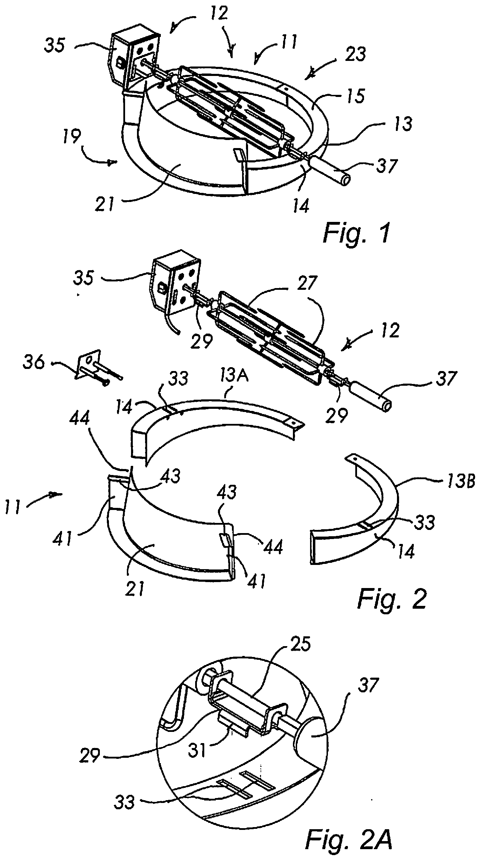

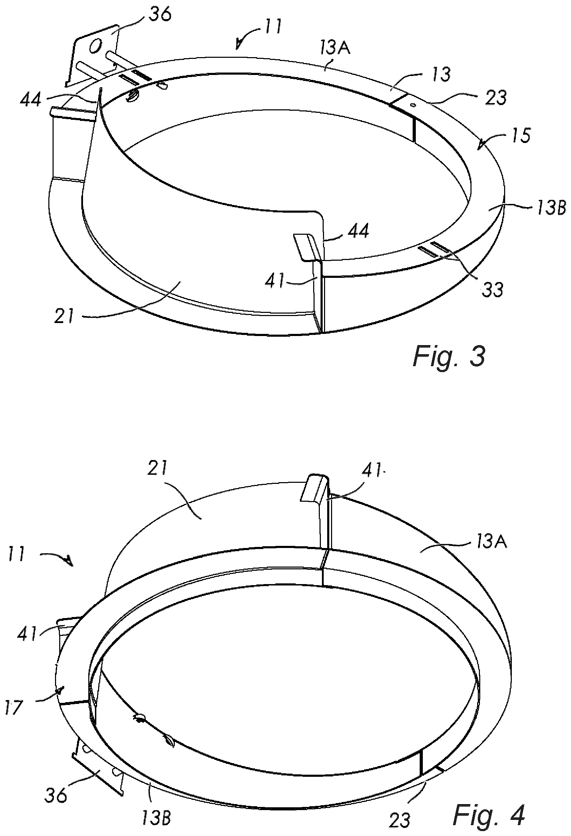

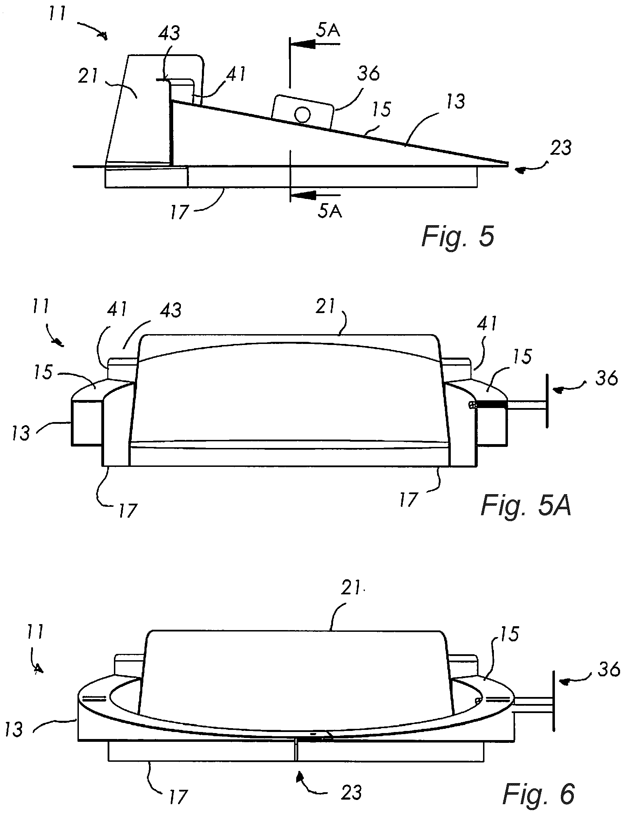

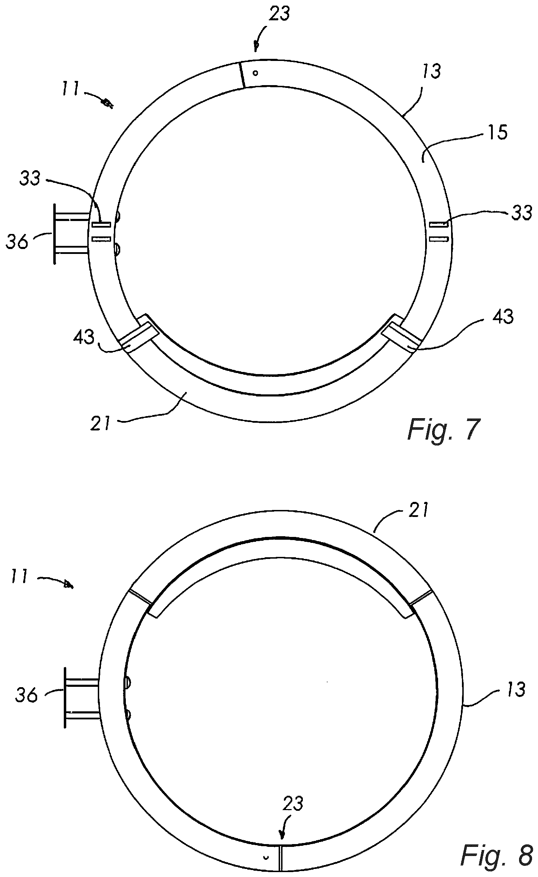

Referring now to the drawings, Figs. 1-8 show a rotisserie support insert 11 for a round barbecue grill configured in its rotisserie mode. In the rotisserie mode, a rotisserie unit 12 is attached to the insert as more fully described below. In pizza mode, the support insert is used without the rotisserie unit as later described.

The convertible rotisserie support insert 11 is seen to have an arcuate body portion 13 which has a top side 15, a bottom side 17, and an open front end 19 that can be closed off by a front cover portion 21. The height of the arcuate body portion, which is defined by the distance between the top and bottom sides of the arcuate body, is seen to taper from a maximum height at the open front end 19 of the body portion to a minimal height at the back end 23 of the body portion. As will be later described, the back end of the arcuate body portion is the portion of the insert that is placed closest to the hinge of the barbecue lid when the insert is installed on the barbecue.

The arcuate body portion 13 is constructed having a radius that conforms to the radius of the top rim of the bowl of the commercially available barbecue grill for which the insert is designed and is suitably fabricated in two sections 13A and 13B as shown in Fig. 2 that can be joined together at the back end 23 of the body by a suitable fastener or fasteners. (Fabrication of the insert in two parts allows inserts to be shipped in smaller, more compact packages.) The arcuate body portion suitably sits on and is supported by the top rim of the grill bowl. Any means can be used to clamp the arcuate body to the bowl rim.

As shown in Figs. 1 and 2, a rotisserie unit 12 that is used with the support insert in the rotisserie mode will typically have a spit rod 25 with meat forks 27, and a rotisserie motor 35 and rotisserie handle 37 at opposite ends of the spit rod. The rotisserie unit is attached to opposite sides of the arcuate body portion of the insert so that it operatively extends across and is supported by the arcuate body. Commercially available rotisserie units are chosen with spit rods having a length that extends beyond the outer walls 14 of the insert's arcuate body. When the rotisserie unit is installed on the rotisserie support insert and when the support insert is placed on a barbecue grill for which it was designed, the meat forks 27 and any meat or other food items on the meat forks will be positioned inside of the arcuate body over the heat source in the barbecue's grill bowl.

As further shown in Figs. 1 and 2, the rotisserie unit is attached to the top side 15 of the arcuate body of the rotisserie support insert. This top side attachment can be achieved by first attaching the rotisserie motor to the arcuate body portion 13 via a mounting bracket 36 attached to the side of the arcuate body portion near the top of the arcuate body. The mounting bracket is seen to hold the rotisserie motor in a suitable position outside of the arcuate body portion for receiving one end of the unit's spit rod. The spit rod is then held in place on the top side 15 of the arcuate body by pivot brackets 29 that pivotally slide, snap or clamp onto the ends of the spit rods. The pivot brackets in turn are provided with at least one and suitably two downwardly projecting prongs 31 that removably fit or snap tightly into prong holes 33 in the top side of the arcuate body. The prong holes (which are suitably in the shape of slots that match flat prongs on the pivot brackets) are provided on opposed sides of the arcuate body. When a rotisserie sized for the barbecue grill is mounted to the arcuate body, the rotisserie motor 35 and rotisserie handle 37 at the two ends of the spit rod will lie outside of the arcuate body.

In this rotisserie mode, a front cover portion 21 is attached to the arcuate body portion and extends across the front opening of the arcuate body portion. The front cover can be attached to the front edges 47 of the arcuate body 13 by any suitable means, such as by using mechanical fasteners, or by configuring the ends of the cover and arcuate body so that they can wedge together. Preferably, the front cover will have an arcuate shape with a radius corresponding to the radius of arcuate body portion 13 of the rotisserie insert, thereby completing the overall circular geometry of the insert. However, it shall be understood that the front cover could be provided in other shapes so long as it provides two primary support functions. First, the front cover completes the structural encirclement of the rotisserie unit, thereby providing stable support for the rotisserie unit. Second, it provides structural means for supporting the hinged lid of the barbecue above the top side of the insert's arcuate body portion to permit air flow through the cooking chamber of the barbecue grill.

The second support function -- that of supporting the hinged lid of the barbecue grill above the top side of the insert's arcuate body portion -- is achieved by upwardly extending lid support structures provided on the insert's front cover 21. The lid support structures are suitably in the form of vertical support walls 41 extending outwardly from the front cover which can be bent over at the top to provide elevated horizontal seating surfaces 43 positioned on the radius of the body portion. The positioning of these seating surfaces will allow the hinged lid of the barbecue grill to rest on the seating surfaces at an angled position relative to the bowl of the barbecue grill. As shown, support walls 41 are most suitably provided at each end 44 of the front cover portion.

Removal of the front cover portion allows the hinged lid of the barbecue to drop down onto the angled top side of the arcuate body portion so that it comes to rest in a second angled use position relative to the bowl of the barbecue grill. This second use position without the front cover would be the desired configuration of the insert when in its "pizza mode."

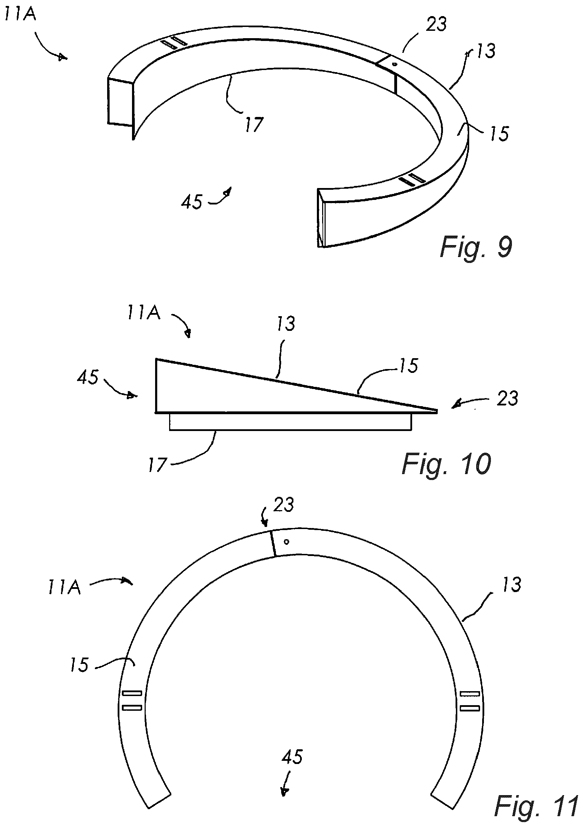

Figs. 9-11 illustrate the insert, denoted 11A, in the pizza mode. In this use mode, the rotisserie unit 11 shown in Figs. 1-8 is removed along with the front cover 21. What is left is the arcuate body portion that can now be used to hold the grill's hinged lid in an open position (second angled use position) with an unobstructed access opening 45 for inserting a pizza or other food item onto the grill grate of the barbecue. The presence of the access opening 45 will allow air circulation within the cooking chamber without having to create a gap between the grill's hinged lid and the top side of the arcuate body.

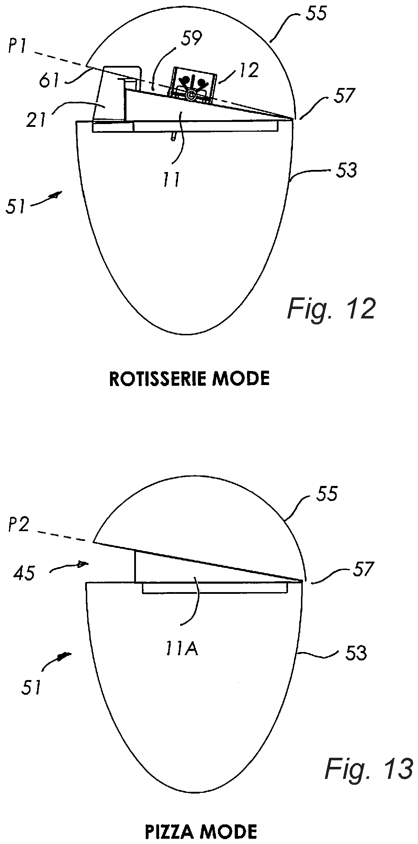

Figs. 12 and 13 show the insert of the invention when deployed in the rotisserie mode (Fig. 12) and pizza mode (Fig 13). In either mode the insert is inserted into a type of commercially available barbecue grill 51 that includes a bowl 53 for a heat source and a lid 55 which is connected to the grill bowl by a hinge (not illustrated). The hinge allows the lid to be rotated about hinge point 57 all the way up to a standing position when food items are to be placed on the grill grate (not shown) of the barbecue. When the insert of the invention is used with this hinged lid barbecue grill, the hinge lid can be closed down onto the insert, where it is propped open to a much lesser degree. The degree to which the lid is propped open will depend on the use mode as above described. In Fig. 12, the rotisserie mode, lid 55 is seen to be propped open to a first angled use position, denoted P1, relative to grill bowl 53 of the barbecue grill, whereas in Fig, 13, the pizza mode, the lid of the barbecue is seen to be propped open to a second angled use position, denoted P2, relative to the grill bowl, which is smaller than angle P1. The degree to which lid 55 is propped open advantageously accommodates the intended use of the insert: in the rotisserie mode it provides an air gap 59 between the top side 15 of the arcuate body of the insert and the rim 61 of the hinged lid supported by the insert; in the pizza mode where the insert converts the barbecue grill into a pizza oven, the lid drops down so as to rest on the top side of the arcuate body. In this mode of use the front of the insert is now open due to the removal of front cover 21.

The above-described components of the support insert of the invention can be fabricated of bent sheet metal at relatively low cost. Suitably, the metal parts can be coated with a high heat powered coating to protect against the high heat environments in which the insert is used. Cost savings are also achieved by mounting a rotisserie to the top of the support insert in accordance with the invention as this avoids the need for more complex attachment schemes for the rotisserie taught by the prior art.

While the present invention has been described in considerable detail in the foregoing specification and accompanying drawings, it is not intended that the invention be limited to such detail, except as necessitated by the following claims. For example, it will be understood that the illustrated rotisserie unit can be attached to the arcuate body portion of the rotisserie support insert by means other than the illustrated top side attachment scheme described herein, or by other top side attachment schemes. Also, the upwardly extending lid support structures on the front cover portion of the insert can be implemented in ways other than illustrated and described, for example, by a single outwardly extending support wall centered on the front cover having a seating edge or surface for supporting the hinged lid, or by other vertical extension configurations that provide a seat for the lid of the barbecue grill.

## Claims

1. A convertible rotisserie support insert for a barbecue grill, wherein the barbecue grill includes a heat source bowl having a circular top rim, a grill grate supported near the top rim of the bowl, and a hinged lid for covering the heat source bowl to create an enclosed cooking chamber above a heat source in the bowl, and wherein the rotisserie to be supported has a spit rod for holding the elements of the rotisserie unit, the support insert comprising:
an arcuate body portion having an open front end, a back end, a top side, and a bottom side, the height of the arcuate body portion being defined by the distance between the top and bottom sides thereof and being tapered from a maximum height at the open front end of the body portion to a minimum height at the back end of the body portion, the arcuate body portion having a radius that allows the arcuate body portion to sit on and be supported by the top rim of the bottom bowl of a round barbecue grill,
means on opposed sides of the arcuate body portion for attaching a rotisserie unit to the arcuate body structure so that the rotisserie unit operatively extends across and is supported by the arcuate body portion, and
a front cover portion removably attachable to the arcuate body portion so as to extend across the front opening of the arcuate body portion, the front cover portion having at least one upwardly extending lid support structure configured to support the hinged lid of a barbecue grill in a first angled use position relative to the bowl of the barbecue grill when the convertible rotisserie support insert is placed on the rim of a hinged lid barbecue bowl, and wherein removal of the front cover portion allows the hinged lid of the barbecue grill to drop down into a second angled use position relative to the bowl of the barbecue grill, and wherein, without the front cover, an access opening is provided at the front end of the arcuate body portion through which food items can be inserted and placed on a grill grate of the barbecue grill.

2. The support insert of claim 1 wherein in the second angled use position the lid of the barbecue grill rests on and is supported by the top surface of the arcuate body portion.

3. The support insert of claim 1 wherein the front portion has an arcuate shape substantially conforming to the arcuate shape of the arcuate body portion.

4. The support insert of claim 1 wherein the at least one upwardly extending lid support structure on the front cover portion of the support insert is comprised of a vertical support wall extending outwardly from the front cover portion, the vertical support wall providing a seat for a hinged barbecue lid which is elevated relative to the top side of the arcuate body portion of the support insert.

5. The support insert of claim 4 wherein the at least one vertical support wall is bent over at the top so as to provide an elevated horizontal seating surface for the hinged lid of a barbecue grill.

6. The support insert of claim 4 wherein the front cover portion has defined ends and wherein a vertical support wall extends outwardly from each end of the front cover portion.

7. The support insert of claim 6 wherein each of the vertical support walls is bent over at the top so as to provide elevated horizontal seating surfaces for the hinged lid of a barbecue grill.

8. The support insert of claim 1 further comprising means for attaching a rotisserie unit to the top side of the arcuate body portion.

9. The support insert of claim 8 wherein the means for attaching a rotisserie unit to the top side of the arcuate body portion includes at least one prong hole in the top side of the arcuate body portion on opposed sides of the arcuate body portion, and pivot brackets pivotally attachable to the ends of the spit rod of a rotisserie unit, the pivot brackets having at least one downwardly projecting prong insertable into the at least one prong hole on opposed sides of the arcuate body portion so as to hold the rotisserie to the top of the body portion.

10. The support insert of claim 9 wherein at least two prong holes are provided in the top side of the arcuate body portion on opposed sides of the arcuate body portion, and wherein the pivot brackets have at least two corresponding downwardly projecting prongs that are insertable into the at least two prong holes on opposed sides of the arcuate body portion.

11. The support insert of claim 1 wherein the arcuate body portion is fabricated in two joinable sections.

12. A convertible rotisserie support insert for a barbecue grill, wherein the barbecue grill includes a heat source bowl having a circular top rim, a grill grate supported near the top rim of the bowl, and a hinged lid for covering the heat source bowl to create an enclosed cooking chamber above a heat source in the bowl, and wherein the rotisserie to be supported has a spit rod for holding the elements of the rotisserie unit, the support insert comprising:
an arcuate body portion having an open front end, a back end, a top side, and a bottom side, the height of the arcuate body portion being defined by the distance between the top and bottom sides thereof and being tapered from a maximum height at the open front end of the body portion to a minimum height at the back end of the body portion, the arcuate body portion having a radius that allows the arcuate body portion to sit on and be supported by the top rim of the bottom bowl of a round barbecue grill,
means on opposed sides of the arcuate body portion for attaching a rotisserie unit to the top side of the arcuate body structure so that the rotisserie unit operatively extends across the arcuate body portion, and
a front cover portion removably attachable to the arcuate body portion of the support insert so as to extend across the front opening of the arcuate body portion, the front cover portion having at least one vertical support wall extending outwardly from the front cover portion, the vertical support wall providing a seat for a hinged lid of a barbecue grill when the hinged lid is closed with the support insert in place on the barbecue grill, wherein when closed the hinged lid is elevated relative to the top side of the arcuate body portion of the support insert in a first angled use position relative to the bowl of the barbecue grill, wherein removal of the front cover portion allows the hinged lid of the barbecue grill to drop down onto the top side of the arcuate body portion and thus to a second angled use position relative to the bowl of the barbecue grill, and further wherein, without the front cover, an access opening is provided at the front end of the arcuate body portion through which food items can be inserted and placed on a grill grate of the barbecue grill.

13. The support insert of claim 12 wherein the means for attaching a rotisserie unit to the top side of the arcuate body portion includes at least one prong hole in the top side of the arcuate body portion on opposed sides of the arcuate body portion, and pivot brackets pivotally attachable to the ends of the spit rod of a rotisserie unit, the pivot brackets having at least one downwardly projecting prong insertable into the at least one prong hole on opposed sides of the arcuate body portion so as to hold the rotisserie to the top of the body portion.

14. The support insert of claim 13 wherein at least two prong holes are provided in the top side of the arcuate body portion on opposed sides of the arcuate body portion, and wherein the pivot brackets have at least two corresponding downwardly projecting prongs that are insertable into the at least two prong holes on opposed sides of the arcuate body portion.

15. The support insert of claim 12 wherein the at least one vertical support wall is bent over at the top so as to provide an elevated horizontal seating surface for the hinged lid of a barbecue grill.
